# EUROPÄISCHE PATENTANMELDUNG

(11) **EP 0 993 093 A2**
(43) Veröffentlichungstag der Anmeldung: **12.04.2000**
(21) Anmeldenummer: 99810848.4
(22) Anmeldetag: 22.09.1999
(51) Int. Cl.: H02J 3/18

(54) **Verfahren und Regelungseinrichtung zur Stabilisierung eines Stromversorgungsnetzes**

(30) Priorität: 05.10.1998 DE 19845851
(71) Anmelder: Asea Brown Boveri AG, 5401 Baden (CH)
(72) Erfinder: Tambe, Shripad, 5403 Baden (CH)
(74) Vertreter: Clerc, Natalia

(57) **Zusammenfassung**

In einem Verfahren zur Stabilisierung eines Stromversorgungsnetzes (1) gegen Blindleistungsschwankungen einer elektrischen Anlage, insbesondere eines Lichtbogenofens (5), mit mindestens einem Transformator (3) wird der mindestens eine Transformator (3) versorgungsnetzseitig in Schaltfolgen ein- und ausgeschaltet, welche einen Grundschwingungs-Leistungsfaktor mit einem Wert von mindestens annähernd gleich 1 ergeben. Die Grundschwingungs-Blindleistung ist somit mindestens annähernd gleich null.

## Beschreibung

### TECHNISCHES GEBIET

Die Erfindung betrifft ein Verfahren zur Stabilisierung eines Stromversorgungsnetzes gegen Blindleistungsschwankungen einer elektrischen Anlage gemäss Oberbegriff des Patentanspruches 1 sowie eine Regelungseinrichtung einer elektrischen Anlage gemäss Oberbegriff des Patentanspruches 6. Die elektrische Anlage ist insbesondere ein Lichtbogenofen.

### STAND DER TECHNIK

Ein generelles Problem in der Leistungselektronik ist die Entstehung von Blindleistung, welche auf das öffentliche Stromnetz rückwirkt und andere, am gleichen Netz angeschlossene Bezüger stört. Dies ist vorallem der Fall, wenn die Blindleistung zeitlich variiert, so dass Netzspannungsschwankungen entstehen, welche beispielsweise als sogenannte Flicker (Lichtschwankungen an Leuchtkörpern) sichtbar werden. Derartige Spannungsschwankungen treten beispielsweise bei Lichtbogenöfen infolge unregelmässiger und unkontrollierter Aenderungen des Lichtbogens auf.

Es sind deshalb die verschiedensten Einrichtungen zur Stabilisierung eines Stromversorgungsnetzes bekannt, welche Schwankungen der Blindlast zu stabilisieren versuchen. Eine gängige Methode ist, den Zündwinkel in Abhängigkeit der sich ändernden Last zu variieren, um so die Blindleistung zu kompensieren.

In US-A-5,463,653 ist beispielsweise ein derartiger statischer VAR Kompensator (SVC = static VAR compensator) beschrieben, bei welchem jede Sekundärspule mit einem Thyristor und einem Freilaufregelkreis verbunden ist. Der Thyristor wird mit einem variablen Zündwinkel getriggert, um unabhängig von der sich ändernden Impedanz der Last eine möglichst konstante Blindleistung zu erhalten.

US-A-5'155'740 hingegen offenbart eine Flicker-Kompensationseinrichtung für Gleichstrom-Lichtbogenöfen, bei der die Blindleistung in Abhängigkeit einer detektierten Blindleistung des Lichtbogenofens geregelt werden soll.

Derartige Kompensationseinrichtungen sind aufwendig und somit relativ teuer.

### DARSTELLUNG DER ERFINDUNG

Es ist deshalb Aufgabe der Erfindung, ein Verfahren und eine Regelungseinrichtung zur Stabilisierung eines Stromversorgungsnetzes gegen Blindleistungsschwankungen einer elektrischen Anlage zu schaffen, um derartige störende Rückwirkungen aufs Netz mit wenig Aufwand zu verhindern.

Diese Aufgabe löst ein Verfahren mit den Merkmalen des Patentanspruches 1 und eine Regelungseinrichtung mit den Merkmalen des Patentanspruches 6.

Es ist eine weitere Aufgabe der Erfindung, die Grösse des Transformers und somit die Kosten für seine Herstellung zu reduzieren. Diese Aufgabe löst eine Vorrichtung mit den Merkmalen des Patentanspruches 8.

Im erfindungsgemässen Verfahren werden Schaltfolgen verwendet, welche es erlauben, dass der Grundschwingungs-Leistungsfaktor in Abhängigkeit des Netzstromes mindestens annähernd stets 1 beträgt. Dies bedeutet, dass die Grundschwingungs-Blindleistung somit stets mindestens annähernd Null ist und sich Schwankungen kaum aufs Netz auswirken.

Ein Netzstrom wird dabei mindestens annähernd symmetrisch zu seinen Extremwerten ein- und ausgeschaltet. An Primärwicklungen eines Transformators werden Spannungsegmente angelegt, welche sich jeweils bis zu einem Extremwert der Netzspannung erstrecken. Dabei wiederholt sich jedes Spannungsegment eines positiven beziehungsweise negativen Zyklus im nachfolgenden Zyklus mit gegenteiligem Vorzeichen.

In einer bevorzugten Variante des Verfahrens wird ein dreiphasiges System verwendet, wobei die Spannungssegmente um 120° phasenverschoben zueinander an der mindestens einen primären Wicklung anliegen. Vorzugsweise ergibt eine Addition aller Spannungssegmente 100% aller Spannungswerte einer Phase.

In einer weiteren bevorzugten Variante des Verfahrens werden die über den Primärwicklungen angelegten Spannungsegmente pulsbreitenmoduliert. Dadurch werden relevante Oberschwingungen verhindert, welche andernfalls negative Rückwirkungen auf das Versorgungsnetz und daran angeschlossene empfindliche Geräte ausüben.

In einer bevorzugten Ausführungsform der erfindungsgemässen Regeleinrichtung zur Durchführung des Verfahrens bestehen die Primärwicklungen aus drei primären Spulen oder Spulensystemen, welche jede mit je einer Phase des Versorgungsnetzes verbindbar ist. Vorzugsweise ist jede Spule beziehungsweise jedes Spulensystem mit einer Freilaufregelkreis verbunden.

In einer anderen bevorzugten Ausführungsform ist lediglich eine primäre Spule oder ein primäres Spulensystem vorhanden, welche dreiphasig beauschlagt wird, wobei jeder Phaseneingang mit einem Schalterelement versehen ist. Ferner sind Mittel zur Verhinderung von Interferenzen der einzelnen Phasen vorhanden sind. Ein derartiges Mittel ist beispielsweise ein Netzkommutator.

In einer bevorzugten Ausführungsform der Erfindung sind alle Primärwicklungen mit denselben Sekundärwicklungen verbunden. Diese Sekundärwicklungen können dabei aus einer einzigen Spule oder einem Spulensystem bestehen. Dadurch lässt sich die Grösse des Ofentransformers reduzieren, wodurch seine Herstellungskosten massiv gesenkt werden können.

Vorteilhaft ist ferner, dass sich das erfindungsgemässe Verfahren sowohl für Gleichstrom- wie auch für Wechselstrom-Lichtbogenöfen verwenden lässt.

### KURZE BESCHREIBUNG DER ZEICHNUNGEN

Die Erfindung wird nachstehend anhand von Ausführungsbeispielen erläutert, welche in den beiliegenden Zeichnungen dargestellt sind. Es zeigen:
- Figur 1a: eine schematische Darstellung eines an einem Versorgungsnetz angeschlossenen Wechselstrom-Lichtbogenofens mit der erfindungsgemässen Regelungseinrichtung;
- Figur 1b: eine schematische Darstellung eines Gleichstrom-Lichtbogenofens mit der erfindungsgemässen Regelungseinrichtung;
- Figur 2: einen versorgungsnetzseitigen Teil der Regelungseinrichtung gemäss einer ersten Ausführungsform der Erfindung;
- Figur 3a: eine schematische Darstellung von Primär- und Sekundärwicklungen des Transformators einer ersten Variante der Schaltung gemäss Figur 2, welcher mit einer Wechselstromlast verbunden ist;
- Figur 3b: eine schematische Darstellung von Primär- und Sekundärwicklungen des Transformators einer zweiten Variante der Schaltung gemäss Figur 2, welcher mit einer Gleichstromlast verbunden ist;
- Figur 4a: eine graphische Darstellung der Spannung über den Primärwicklungen;
- Figur 4b: eine graphische Darstellung des Netzstromes;
- Figur 5a: eine graphische Darstellung der Ausgangspannung über der Sekundärwicklung;
- Figur 5b: eine graphische Darstellung der Ausgangsspannung nach einem Gleichrichter;
- Figur 5c: eine Pulsbreitenmodulation eines angelegten Spannungssegmentes und
- Figur 6: einen versorgungsnetzseitigen Teil der Regelungseinrichtung gemäss einer zweiten Ausführungsform der Erfindung.

### WEGE ZUR AUSFÜHRUNG DER ERFINDUNG

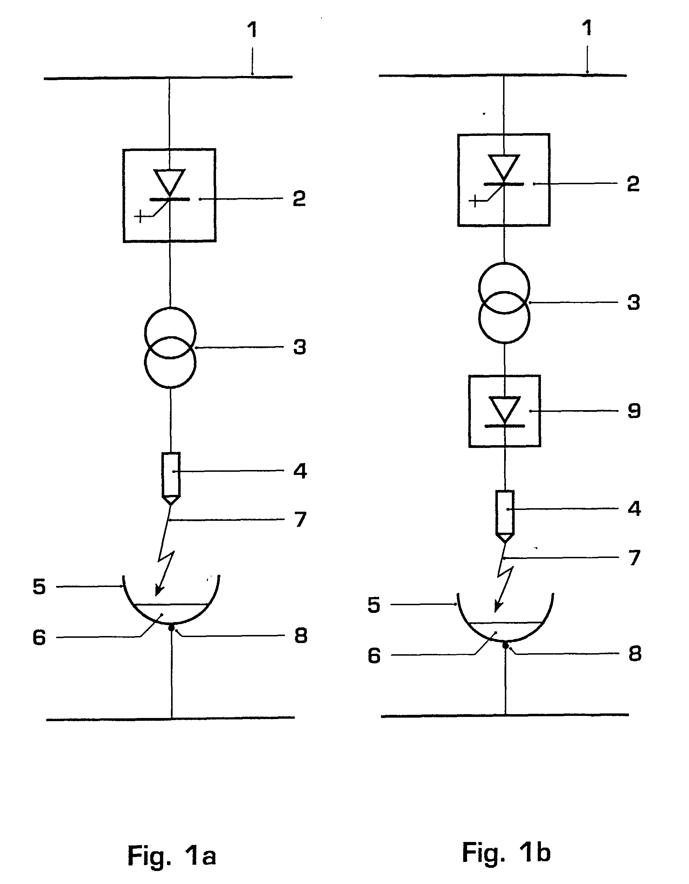

Die Figuren 1a und 1b zeigen eine Lichtbogenofen 5 mit mindestens einer ersten Elektrode 4, welcher über einen Ofentransformator 3 und einer Schaltereinrichtung 2 an ein Wechselstromnetz 1 angeschlossen ist. Eine zweite Elektrode 8 befindet sich im Bodenbereich des Lichtbogenofens 5. Der Lichtbogenofen 5 lässt sich mit einem zu schmelzenden Gut 6 beschicken. Im Betriebszustand des Lichtbogenofens brennt zwischen einem unteren Ende der ersten Elektrode 4 und der Oberfläche des zu schmelzenden Gutes 6 ein Lichtbogen 7. Der in Figur 1a dargestellte Lichtbogenofen wird mit Wechselstrom betrieben, derjenige aus Figur 1b mit Gleichstrom. Beim Gleichstrom-Lichtbogenofen ist, wie aus Figur 1b ersichtlich, zwischen Ofenfransformator 3 und erster Elektrode 4 ein Gleichrichter 9 zur Umwandlung des Wechselstromsignals in ein Gleichstromsignal angeordnet.

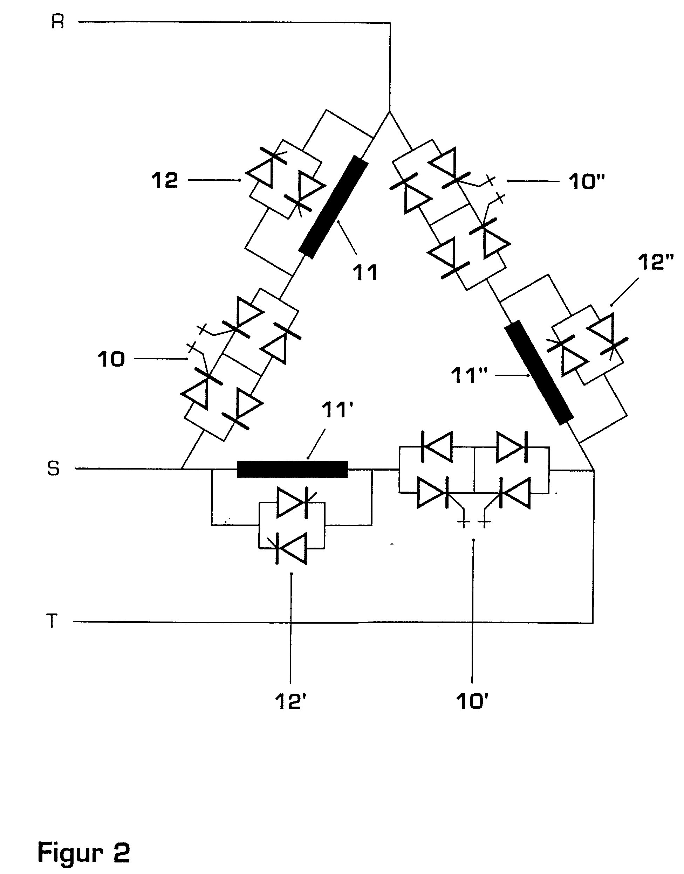

In Figur 2 ist eine erste Ausführungsform der erfindungsgemässen Regeleinrichtung dargestellt, wobei ein erfindungswesentlicher Teil der Schaltereinrichtung sowie eine Primärstufe des Ofentransformators sichtbar sind. Ein dreiarmiger, geschlossener Regelkreis ist mit drei Phaseneingängen R,S,T versehen. Zwischen einem ersten Phaseneingang R und einem zweiten Phaseneingang S sind erste Primärwicklungen 11 und in Reihe nachfolgend ein erstes Schalterelement 10 angeordnet. Parallel zu den ersten Primärwicklungen 11 ist ein erster Freilaufregelkreis 12 angeordnet. Dieselben Elemente befinden sich auch zwischen dem zweiten Phaseneingang S und dem dritten Phaseneingang T beziehungsweise zwischen dem dritten und dem ersten Phaseneingang: das heisst zweite bzw. dritte Primärwicklungen 11', 11'', zweite und dritte Schalterelemente 10',10'' und zweite und dritte Freilaufregelkreise 12',12''.

In diesem Beispiel bestehen die Primärwicklungen 11,11',11'' aus Spulen, wie sie üblicherweise bei Transformatoren eingesetzten werden, dabei ist es auch möglich, ein Spulensystem bestehend aus mehreren Spule zu verwenden. Die Freilaufregelkreise 12,12',12'' werden in diesem Beispiel aus je zwei Freilaufdioden gebildet, es lassen sich jedoch auch andere üblicherweise verwendete Mittel einsetzen. Die Schalterelemente 10,10',10'' sind schnelle bidirektionale Schalter, das heisst mit kürzeren Schaltzeiten als konventionelle Thyristoren. Geeignete Schalterelemente sind beispielsweise GTO (Gate Turn Off-Thyristor), IGCT (Integrated Gate Commutated Thyristor), IGBT (Insulated Gate Bipolar Transistor) oder Elemente mit Schaltzeiten, welche mit den genannten Elementen vergleichbar oder kürzer sind. Vorzugsweise werden für jeden Arm des Regelkreises Elemente mit denselben Kenndaten verwendet, so dass die drei Arme identisch aufgebaut sind.

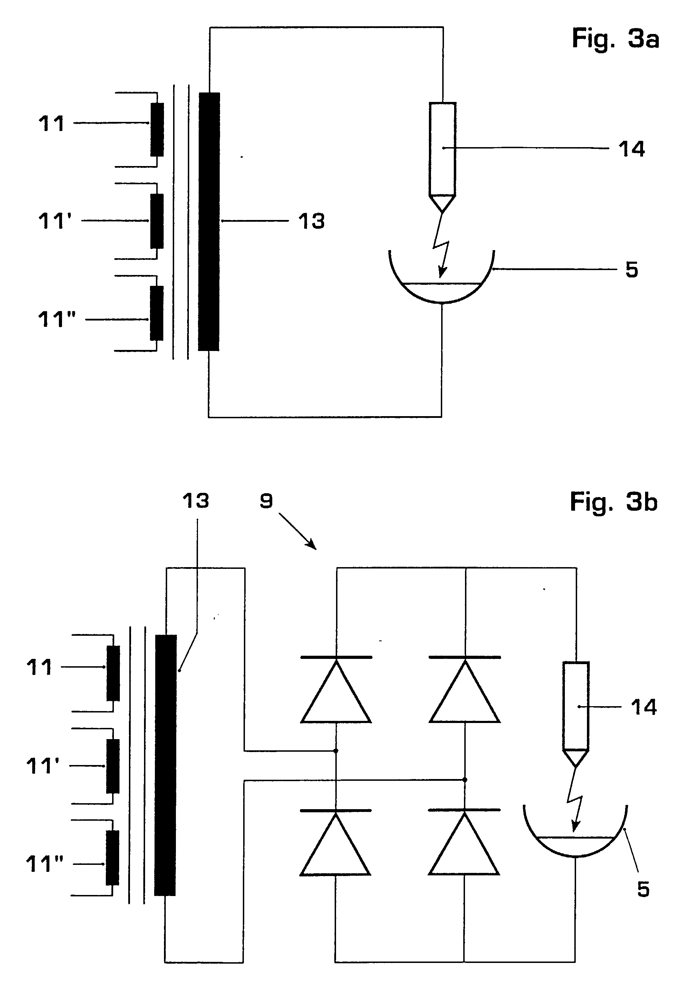

Wie aus den Figuren 3a und 3b ersichtlich ist, sind alle drei Primärwicklungen 11,11',11'' mit denselben Sekundärwicklungen 13 wirkverbunden. Auch die Sekundärwicklungen 13 bestehen wie die Primärwicklungen 11 aus einer Spule oder sie sind aus einem Spulensystem zusammengesetzt. Die Sekundärwicklung 13 lässt sich im Falle eines Wechselstrom-Lichtbogenofens mit einer Wechselstromlast direkt mit der ersten Elektrode 4 verbinden, wie dies in Figur 3a dargestellt ist. Im Falle eines Gleichstrom-Lichtbogenofens ist, siehe Figur 3b, zwischen Sekundärwicklung 13 und erster Elektrode 4 ein Gleichrichter 9 geschaltet.

Im folgenden wird anhand der in den Figuren 1 - 3 dargestellten Ausführungsform das erfindungsgemässe Verfahren erläutert: Mittels der schnellen Schalterelemente 10,10',10'' wird ein dreiphasiges sinusförmiges Eingangssignal in Schaltfolgen ein- und ausgeschaltet, welche stets einen Grundschwingungs-Leistungsfaktor mit einem Wert von mindestens annähernd 1 ergeben. Hierfür wird eine sinusförmige Eingangsspannung in Spannungssegmente unterteilt, welche an die Primärwicklungen 10,10',10'' angelegt werden.

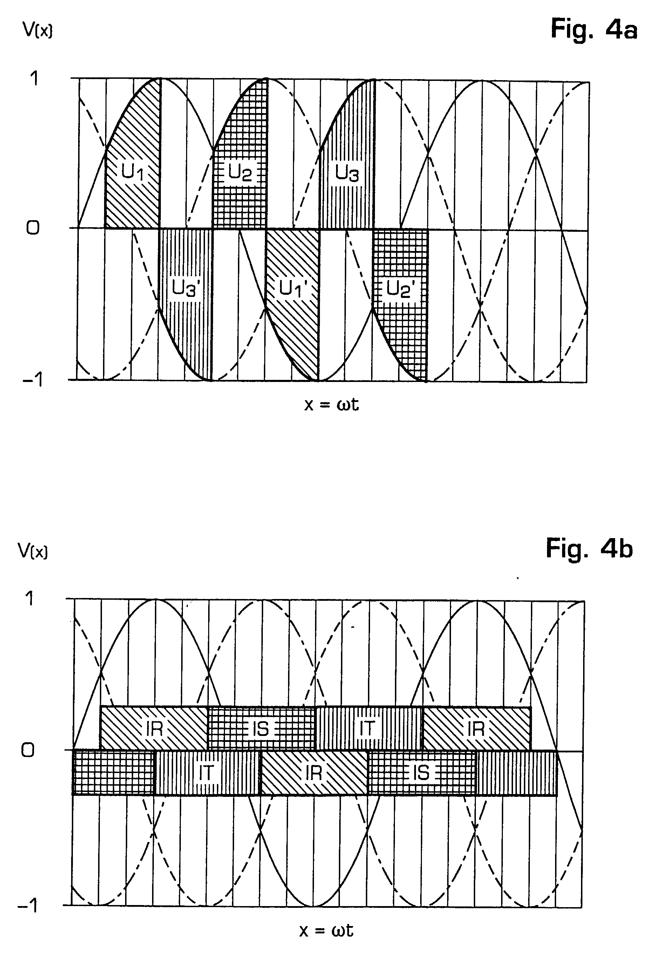

In Figur 4a sind die über den Primärwicklungen 10,10',10'' anliegenden Spannungswerte in Funktion der Zeit dargestellt. Die sinusförmigen Kurven zeigen das dreiphasige Eingangssignal, die schraffierten Flächen die über den drei Primärwicklungen 10,10',10' anliegenden Spannungssegmente. Ein erstes positives Spannungssegment U1, welches über den ersten Primärwicklungen 10 anliegt, wächst von einem Minimalwert bis zu einem Maximalwert, welcher einem Extremalwert der Eingangs- oder Netzspannung entspricht. Dieses erste positive Spannungsegment U1 hat im negativen Zyklusteil dieser Phase sein identisches Pendant in einem zweiten negativen Spannungsegment U1'. Ebenso sind zweite beziehungsweise dritte positive sowie negative Spannungssegmente U2, U2' und U3, U3' vorhanden, welche über die zweiten beziehungsweise dritten Primärwicklungen 10',10'' anliegen.
Wie hier dargestellt ist, ist der Spannungswert eines Segmentes mindestens annähernd auf Null gesenkt, bevor das nachfolgende Segment startet. Eine Addition aller Spannungsegmente ergibt dabei mindestens annähernd 100% eines einphasigen Eingangssignals.

In der Figur 4b sind die zugehörigen Netzstromwerte in Funktion der Zeit angegeben. Die sinusförmige Kurve entspricht dabei dem eingangsseitigen, ungeschalteten Stromsignal, die mit Schraffuren versehenen rechteckförmigen Kurven dem jeweils zu den Spannungssegmenten zugehörigen Netzstrom der einzelnen Phasen. So bezeichnet IR den Netzstrom der ersten Phase, IS denjenigen der zweiten und IT der dritten Phase. Wie anhand der Figuren 4a und 4b erkannt wird, wird der sinusförmige Netzstrom symmetrisch zu seinen Extremalwerten ein- und ausgeschaltet. Dadurch sind die Grundschwingungsnetzströme IR,IS und IT phasengleich mit der effektiven Spannung, so dass der Grundschwingungs-Leistungsfaktor gleich 1 ist. Die in Figur 2 dargestellten Freilaufbeschaltungen 12,12',12'' verhindern dabei, dass im Abschaltvorgang zu hohe Spannungen entstehen.

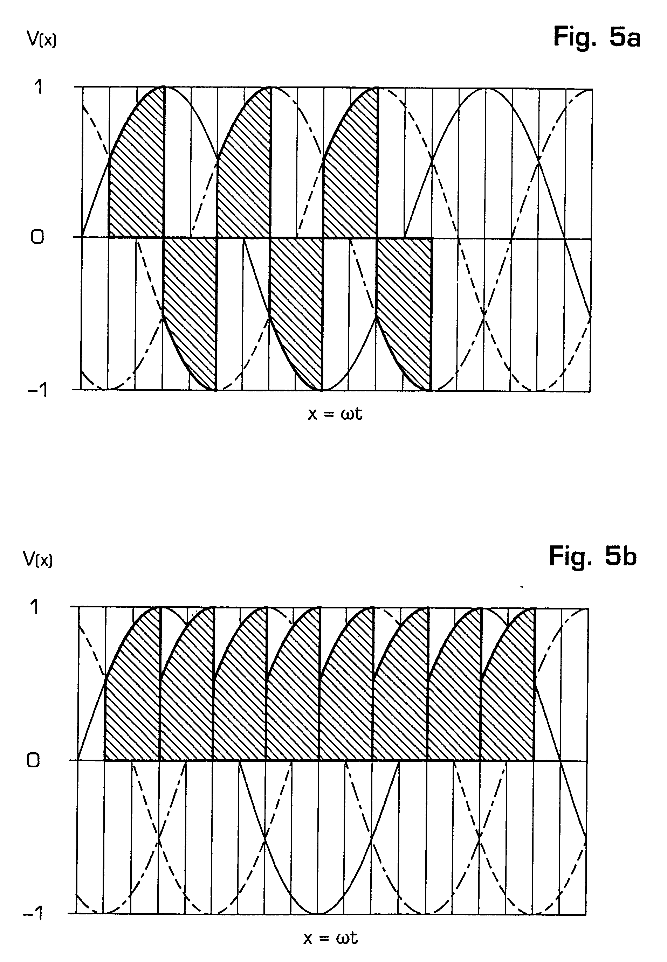

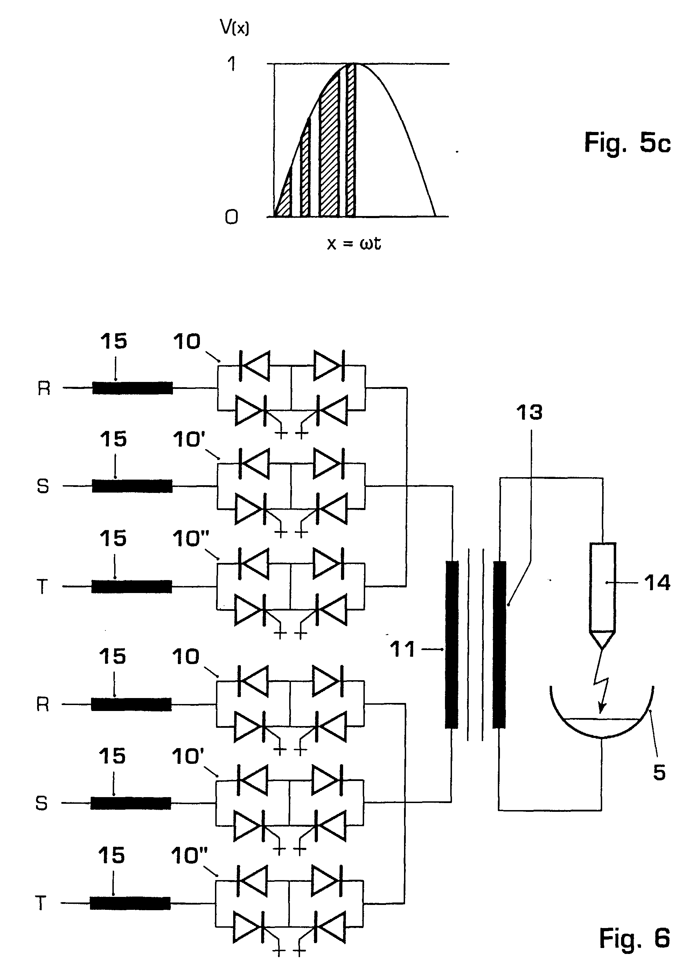

In Figur 5a sind die über der Sekundärwicklung anliegenden Spannungswerte dargestellt. Sie entsprechen im wesentlichen den an den Primärwicklungen angelegten Spannungssegmenten. Figur 5b zeigt die Spannung nach dem Gleichrichter 9. Beträgt die Addition der Spannungssegmente über der Sekundärwicklung nicht 100% des Eingangssignals, so werden die über der Primärwicklung angelegten Spannungssegmente einer Pulsbreitenmodulation unterworfen, um den Leistungsfaktor mindestens annähernd bei 1 zu belassen. Dies ist in Figur 5c dargestellt. In einer bevorzugten Variante des Verfahrens wird grundsätzlich eine Pulsbreitenmodulation durchgeführt, um Oberschwingungen zu verhindern oder zumindest zu reduzieren.

In Figur 6 ist eine zweite Ausführungsform einer erfindungsgemässen Regelungseinrichtung für einen Lichtbogenofen dargestellt:
Anstelle von drei getrennten Primärwicklungenssystemen ist lediglich ein Primärwicklungssystem 11 vorhanden, welches mit den Sekundärwicklungen 13 wirkverbunden ist. Das Primärwicklungssystem 11 ist beidseitig mit je drei parallel geschalteten Schalterelementen 10,10',10'' verbunden, welche jeweils einem Phaseneingang beziehungsweise Phasenausgang R,S,T zugeordnet sind. Zwischen Schalterelementen 10,10',10'' und Phasenein- bzw. -ausgang ist jeweils mindestens ein Netzkommutaotr angeordnet, welcher ein Kommutieren und somit störende Wechselwirkungen der einzelne Phasen verhindert. Diese Regelungseinheit beziehungsweise der Transformator wird wiederum mit den oben beschriebenen Schaltfolgen gemäss den Figuren 3a und 3b ein- und ausgeschaltet, so dass über den Sekundärwicklungen wiederum eine Spannung gemäss Figur 5 anliegt.

### BEZEICHNUNGSLISTE

- 1: Versorgungsstromnetz
- 2: Schaltereinrichtung
- 3: Ofentransformator
- 4: erste Elektrode
- 5: Lichtbogenofen
- 6: zu schmelzendes Gut
- 7: Lichtbogen
- 8: zweite Elektrode
- 9: Gleichrichter
- 10: erstes Schalterelement
- 10': zweites Schalterelement
- 10'': drittes Schalterelement
- 11: erste Primärwicklungen
- 11': zweite Primärwicklungen
- 11'': dritte Primärwicklungen
- 12: erster Freilaufregelkreis
- 12': zweiter Freilaufregelkreis
- 12'': dritter Freilaufregelkreis
- 13: Sekundärwicklungen
- 14: Last
- 15: Netzkommutator
- R: erster Phaseneingang
- S: zweiter Phaseneingang
- T: dritter Phaseneingang
- U1: erstes positives Spannungssegment
- U1': erster negatives Spannungssegment
- U2: zweites positives Spannungssegment
- U2': zweites negatives Spannungssegment
- U3: drittes positives Spannungssegment
- U3': drittes negatives Spannungssegment
- IR: Netzstrom der ersten Phase
- IS: Netzstrom der zweiten Phase
- IT: Netzstrom der dritten Phase

## Patentansprüche

1. Verfahren zur Stabilisierung eines Stromversorgungsnetzes gegen Blindleistungsschwankungen einer elektrischen Anlage, insbesondere eines Lichtbogenofens (5), mit mindestens einem Transformator (3), dadurch gekennzeichnet, dass der mindestens eine Transformator (3) versorgungsnetzseitig in Schaltfolgen ein- und ausgeschaltet wird, welche einen Grundschwingungs-Leistungsfaktor mit einem Wert von mindestens annähernd gleich 1 ergeben.

2. Verfahren nach Anspruch 1, dadurch gekennzeichnet, dass ein Netzstrom mindestens annähernd symmetrisch zu seinen Extremalwerten ein- und ausgeschaltet wird.

3. Verfahren nach Anspruch 1, dadurch gekennzeichnet, dass über Primärwicklungen (11,11',11'') des mindestens einen Transformators (3) Spannungssegmente (U1,U1',U2,U2',U3,U3') einer Eingangsspannung angelegt werden, wobei sich jedes Spannungssegment mindestens annähernd bis zu einem Extremalwert der Eingangsspannung erstreckt.

4. Verfahren nach einem der Ansprüche 1 oder 3, dadurch gekennzeichnet, dass die Spannungssegmente pulsbreitenmoduliert werden.

5. Verfahren nach Anspruch 3, dadurch gekennzeichnet, dass die über die Primärwicklungen angelegten Spannungssegmente 120° phasenverschoben zueinander sind, wobei der Spannungswert eines Segmentes mindestens annähernd auf Null gesenkt, bevor das nachfolgende Segment startet.

6. Regelungseinrichtung einer elektrischen Anlage, insbesondere eines Lichtbogenofens (5) zur Durchführung des Verfahrens nach einem der Anspruch 1 bis 5, mit mindesten einem Transformator (3) mit Primär- und Sekundärwicklungen (11,11',11'',13), dadurch gekennzeichnet, dass versorgungsnetzseitig mindestens ein Schalterelement (10,10',10'') angeordnet und mit den Primärwicklungen (11,11',11'') wirkverbunden ist, welches in Schaltfolgen abschaltbar ist, wobei die Schaltfolgen zu einem Grundschwingungsfaktor mit mindestens annähernd dem Wert 1 führen.

7. Regelungseinrichtung nach Anspruch 6, dadurch gekennzeichnet, dass das mindestens eine Schalterelement (10,10',10'') ein GTO (Gate Turn Off Thyristor), ein IGCT (Integrated Gate Commutated Thyristor), ein IGBT (Insulated Gate Bipolar Transistor) oder ein Element mit den genannten Elementen vergleichbaren oder kürzeren Schaltzeiten ist.

8. Regelungseinrichtung nach Anspruch 6, dadurch gekennzeichnet, dass alle Primärwicklungen (11,11',11'') mit denselben Sekundärwicklungen (13) wirkverbunden sind.

9. Regelungseinrichtung nach einem der Anspräche 6 bis 8, dadurch gekennzeichnet, dass drei Primärwicklungssysteme (11,11',11'') und drei Schalterelemente (10'10',10'') vorhanden sind, welche einen geschlossenen dreiarmigen Regelkreis bilden, wobei je eine Primärwicklungssystem und ein zugehöriges Schalterelement mit je einer Phase (R,S,T) einer dreiphasigen Netzversorgung verbindbar sind.

10. Regelungseinrichtung nach einem der Ansprüche 6 bis 8, dadurch gekennzeichnet, dass ein einziges Primärwicklungssystem (11) vorhanden ist, welches mit einer dreiphasigen Netzversorgung verbindbar ist, wobei das Primärwicklungssystem netzversorgungsseitig mit mindestens drei Schalterelementen (10,10',10'') wirkverbunden ist, wobei jedes Schalterelement mit je einer Phase (R,S,T) der Netzversorgung verbindbar ist.
